Europäisches Patentamt

European Patent Office

Office européen des brevets

(11) Veröffentlichungsnummer: **0 508 342 A1**

## (12) EUROPÄISCHE PATENTANMELDUNG

(21) Anmeldenummer: **92105878.0**

(51) Int. Cl.5: **H04N 5/44**, H04N 7/12

(22) Anmeldetag: **04.04.92**

(30) Priorität: **12.04.91 DE 4111980**

(43) Veröffentlichungstag der Anmeldung:
**14.10.92 Patentblatt 92/42**

(84) Benannte Vertragsstaaten:
**PT**

(71) Anmelder: **DEUTSCHE THOMSON-BRANDT GMBH**

**W-7730 Villingen-Schwenningen(DE)**

(72) Erfinder: **Herpel, Carsten**
**Grosse Barlinge 61**
**W-3000 Hannover 1(DE)**
Erfinder: **Hepper, Dietmar**
**Volgersweg 28**
**W-3000 Hannover 1(DE)**

(54) **Verfahren zur Codierung.**

(57) Bei der Codierung von Bildsignalen werden oft für Bildpunkt-Blöcke Bewegungsvektoren ermittelt. In EP 0 414 113 ist ein Verfahren beschrieben, wie aus einem Feld von Bewegungsvektoren für Bildpunkt-Blöcken ein Zoom- und Pan-Vektor für jeweils ein ganzes Bild generiert werden kann.

Bei einer Formatwandlung von Bildsignalen, die vor der Codierung zumindest vertikal unterabgetastet werden, werden jeweils für ein ganzes Bild geltende Bewegungsparameter verwendet, um nach der Unterabtastung eine maximale Ortsauflösung zu erhalten. Nur die verbleibenden, nicht vollständig bewegungskompensierten Bildteile werden mittels eines einfachen Änderungsdetektors erfaßt und im Halbbild vertikal gefiltert.

FIG.1

EP 0 508 342 A1

Die Erfindung betrifft ein Verfahren zur bewegungskompensierten Vertikalfilterung.

Stand der Technik

In EP 0 414 113 ist ein Verfahren beschrieben, wie aus einem Feld von Bewegungsvektoren, z.B. abgeleitet von Bildpunkt-Blöcken, ein Zoom- und Pan-Vektor (Vergrößerungs- und Schwenk-Vektor) für ein ganzes Bild generiert werden kann.

Erfindung

Der Erfindung liegt die Aufgabe zugrunde, ein Verfahren zur bewegungskompensierten Vertikalfilterung anzugeben. Diese Aufgabe wird durch die in Anspruch 1 angegebene Erfindung gelöst.

Im Prinzip besteht das erfindungsgemäße Verfahren darin, daß bei einer Codierung, bei der aus Bildpunkten bestehende Bildsignale bewegungskompensiert und unter Generierung von Bewegungsparametern codiert werden, bei einer vor der Codierung erfolgenden Bildformatwandlung bildweise Bewegungsparameter zur Bewegungskompensation verwendet werden, wobei die Bildsignale bei der Bildformatwandlung mindestens in vertikaler Richtung unterabgetastet werden und wobei mit Hilfe einer Änderungsdetektion aufgrund der bildmäßigen Bewegungskompensation nicht korrekt bewegungskompensierte Bildpunkte ermittelt werden und wobei die Bildpunkte im Fall korrekter Bewegungskompensation vertikal im Vollbild und im Fall nicht korrekter Bewegungskompensation vertikal im Halbbild gefiltert werden.

Vorteilhafte Weiterbildungen des erfindungsgemäßen Verfahrens ergeben sich aus den Unteransprüchen 2 bis 9.

Bei einer datenreduzierenden Bildcodierung mit Bewegungskompensation werden Bewegungsvektoren für einzelne Bilder oder Bildteile erzeugt. Um die Datenrate weiter zu verringern, können die Bildsignale vor der Codierung unterabgetastet werden.

Wenn die Bildsignale vor der Unterabtastung im Interlace vorliegen und nach der Codierung ein progressives Format haben sollen, kann vor der Codierung in einem Bildformatwandler eine interlace-progressiv-Bildformatumwandlung stattfinden. Progressive Bildsignale können z.B. durch Weglassen jedes zweiten Halbbilds gewonnen werden, wobei allerdings ohne eine entsprechende Vorfilterung Alias in das unterabgetastete Signal eingeführt wird und die mögliche Vertikalauflösung für statischen Bildinhalt vor der Unterabtastung um den Faktor zwei verkleinert wird.

Es kann auch eine bewegungsadaptive Vertikalfilterung vor der Unterabtastung durchgeführt werden. Dabei werden aber im allgemeinen größere Bildbereiche als bewegt angesehen. In diesen Bereichen wird die Vertikalauflösung dann um mehr als den Faktor zwei reduziert.

Bei einer Serienschaltung von Bildformatwandlung mit Unterabtastung und bewegungskompensierter Codierung liegen nach der Codierung von Bild n Bewegungsparameter für die Größe von Zoom und Pan zwischen Bild n-2 und Bild n-1 vor. Da sich diese Parameter in üblichen Fernseh-Bildsignalen nicht sprunghaft von Bild zu Bild ändern, können diese vorliegenden Zoom- und Pan-Parameter als Prädiktion für die noch nicht bekannten entsprechenden Parameter zwischen Bild n-1 und Bild n benutzt werden.

Bei der Bildformatwandlung wird nun jeweils das zweite Halbbild von Bild n mit Hilfe der Zoom- und Pan-Parameter auf die zeitliche und räumliche Position des ersten Halbbilds von Bild n verschoben. Zur Rauschminderung kann vorteilhaft jeweils das zweite Halbbild von Bild n-1 und von Bild n mit Hilfe der Zoom- und Pan-Parameter auf die zeitliche und räumliche Position des ersten Halbbilds von Bild n verschoben werden.

Mit Hilfe eines Änderungsdetektors wird für jeden Bildpunkt im ersten Halbbild von Bild n bestimmt, ob noch nicht-kompensierte Bewegung, z.B. innerhalb von einzelnen Bildbereichen mit unterschiedlichen Bewegungsparametern gegenüber den bildmäßigen, vorliegt. Wenn dies der Fall ist, werden die Bildpunkte aus solchen Bildbereichen mit Hilfe von entsprechenden Bildpunkten des jeweiligen ersten Halbbilds für die Unterabtastung vorgefiltert. Anderenfalls wird eine Filterung benutzt, die Bildpunkte aus dem bewegungskompensierten zweiten Halbbild von Bild n bzw. aus den bewegungskompensierten zweiten Halbbildern von Bild n und n-1 und den aktuellen Bildpunkt selbst verwendet (Filterung im bewegungskompensierten Vollbild).

Die Benutzung von jeweils drei Halbbildern bewirkt dabei die rauschmindernde zeitliche Filterung.

Die während der Formatwandlung generierten Bildsignale liegen in ihrer Ortsauflösung je nach Bildmaterial nahezu an der systemtheoretisch bzw. filtertechnisch möglichen Grenze und enthalten keinen Alias, der von einer Unterabtastung ohne Vorfilterung herrührt. Es ist für die Formatwandlung keine separate Bewegungsschätzung erforderlich, um die bewegungskompensierte zeitliche Vorfilterung durchführen zu können.

Zeichnungen

Anhand der Zeichnungen wird ein Ausführungsbeispiel der Erfindung beschrieben. Diese zeigen in:

Fig. 1 Schaltung zur Bildcodierung mit einem in Reihe mit einem Coder geschalteten Bildformatwandler;

Fig. 2 den Bildformatwandler aus Fig. 1.

Ausführungsbeispiele

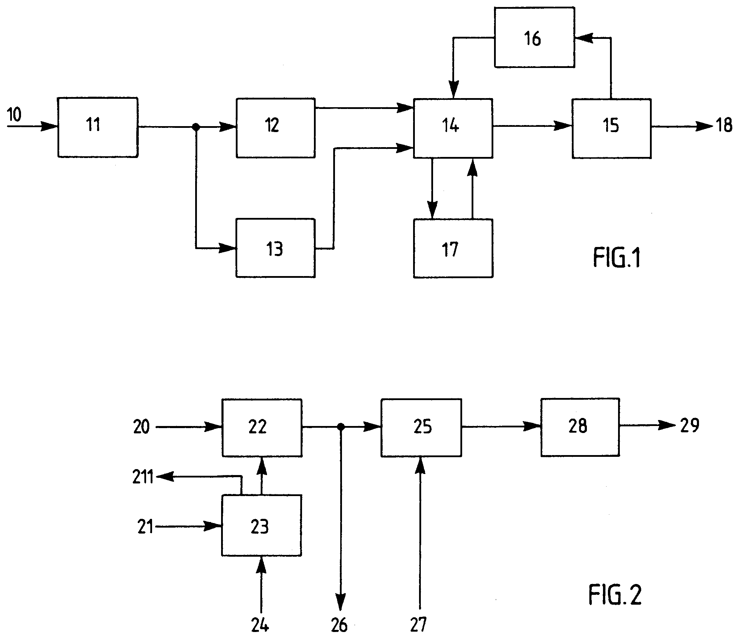

In Fig. 1 ist ein in Reihe mit einem Coder 15 geschalteter Bildformatwandler 14 dargestellt. Dem Bildformatwandler ist ein Halbbildspeicher 12 und ein Zeilenspeicher 13 vorgeschaltet, deren Eingänge miteinander verbunden sind. Im Fall einer Unterabtastung auch in horizontaler Richtung wird diese verbunden mit einer entsprechenden Vorfilterung vorteilhaft in einem Horizontal-Bildformatwandler 11 durchgeführt, der dem Halbbildspeicher 12 und dem Zeilenspeicher 13 vorgeschaltet ist. Dadurch wird die erforderliche Verarbeitungsgeschwindigkeit in den nachfolgenden Schaltungen reduziert.

Dem Eingang 10 wird ein Interlace-Bildsignal mit den Bildern $S_n$, n = 1,2,3,... zugeführt. Am Ausgang des Bildformatwandlers 14 zum Coder steht danach das gefilterte und unterabgetastete Bildsignal $s_n$ zur Verfügung.

In einem Bewegungs-Parameter-Generator 16 werden aus dem Coder 15 stammende, blockweise Bewegungsparameter, z.B. für Zoom und Pan, in bildweise Bewegungsparameter $p_{n-1}$ für das Bildpaar $s_{n-2},s_{n-1}$ (z, $v_x$, $v_y$) generiert. Dies kann beispielsweise wie in EP 0 414 113 beschrieben ausgeführt werden. 'z' ist dabei der Zoomfaktor, '$v_x$' die Verschiebung in horizontaler Richtung und '$v_y$' die Verschiebung in vertikaler Richtung zwischen zwei Bildern im zeitlichen Abstand von 1/25s. Vorteilhaft wird durch die bildmäßige Bereitstellung und Verarbeitung der Bewegungsparameter die erforderliche Verarbeitungsgeschwindigkeit im Bildformatwandler herabgesetzt.

Die Kompensation der Bewegung in den zweiten Halbbildern $S^2_{n-1}$ und $S^2_n$ auf den Zeitpunkt des jeweils zugehörigen ersten Halbbildes $S^1_n$ mit einer zeitlichen Differenz von ±1/50s erfordert eine Division der Bewegungsparameter durch den Wert 2. Da andererseits die Ortsauflösung im Halbbild, abgesehen von einer eventuellen horizontalen Bildformatwandlung, in horizontaler Richtung doppelt so groß ist wie in vertikaler, gilt für die im Bildformatwandler 14 zu verwendenden Bewegungsparameter:

$$Z = z/2$$
$$V_x = v_x$$
$$V_y = v_y/2$$

Die kompensierten 2. Halbbilder $S^{2k}_n$, $S^{2k}_{n-1}$ berechnen sich zu

$$S^{2k}_n (x,y) = S^2_n ((1-Z)^*x-V_x, (1-Z)^*y-V_y)$$
$$S^{2k}_{n-1}(x,y) = S^2_{n-1}((1+Z)^*x+V_x, (1+Z)^*y+V_y),$$

wobei (x,y) einem Koordinatensystem mit Ursprung in der Bildmitte entstammen.

Mit einem Änderungsdetektor 17 werden für jede Position (x,y) im ersten Halbbild $S^1_n$ in einem symmetrisch hierzu angeordneten Fenster von Bildpunkt-Positionen die Absolutwerte der Differenzen der bewegungskompensierten zweiten Halbbilder $S^{2k}_{n-1}$, $S^{2k}_n$ zu einem Wert $\Sigma$ aufsummiert. Die Größe des Fensters ist variabel. Vorzugsweise beträgt sie 5*4 Bildpunkte.

Übersteigt der Wert $\Sigma$ eine erste Schwelle $T_1$ nicht, so erfolgt eine Filterung im bewegungskompensierten Vollbild:

$$S^{1f}_n(x,y) = fil^v_n(x,y).$$

Übersteigt der Wert $\Sigma$ eine zweite, höhere Schwelle $T_2$, so erfolgt eine Filterung im Halbbild:

$$S^{1f}_n(x,y) = fil^h_n(x,y).$$

Liegt der Wert $\Sigma$ zwischen beiden Schwellen, so ist das Ergebnis eine Linearkombination beider Filtersigna-le:

$$S^{1f}_n(x,y) = r^*fil^v_n(x,y) + (1-r)^*fil^h_n(x,y),$$

mit $r = (T_2 - \Sigma)/(T_2 - T_1)$.

Die Schwellen können z.B. zu $T_1 = 6 \cdot$(Anzahl der Bildpunkte im Fenster) bzw. $T_2 = 12 \cdot$(Anzahl der Bildpunkte im Fenster) gewählt werden.

Zur Änderungs-Detektion kann beispielsweise ein Bildpunkt-Bewegungsdetektor verwendet werden, wie er in EP 0 333 069 beschrieben ist. Der Änderungsdetektor 17 erhält entsprechende Eingangsdaten vom Bildformatwandler 14 und sendet den Wert $\Sigma$ zurück.

Die Anzahl der gespeicherten Zeilen in Zeilenspeicher 13 entspricht der maximalen Bewegungskompensation in vertikaler Richtung.

Vorteilhaft entspricht die Filterlänge für die Vertikalfilterung dem Fenster für die Änderungsdetektion in vertikaler Richtung.

Für das vertikale Vollbild-Filter kann gelten:

$$fil^v_n(x,y) = [k_0 \cdot S^1_n(x,y) +$$

$$k_1 \cdot (S^{2k}_{n-1}(x,y-1) + S^{2k}_n(x,y-1)) +$$

$$k_1 \cdot (S^{2k}_{n-1}(x,y\ ) + S^{2k}_n(x,y\ )) +$$

$$k_2 \cdot (S^{2k}_{n-1}(x,y+1) + S^{2k}_n(x,y+1)) +$$

$$k_2 \cdot (S^{2k}_{n-1}(x,y+2) + S^{2k}_n(x,y+2))] /$$

$$(k_0 + 4 \cdot (k_1 + k_2)),$$

mit $k_0 = 128$, $k_1 = 75$, $k_2 = -11$.

Dabei ist zu beachten, daß $S^2_n(x,y-1)$ im Vollbild unmittelbar über $S^1_n(x,y)$ und $S^2_n(x,y)$ unmittelbar darunter liegt.

Für das vertikale Halbbild-Filter kann gelten:

$$fil^h_n(x,y) = [k_0 \cdot S^1_n(x,y) +$$

$$k_1 \cdot (S^1_n(x,y-1) + S^1_n(x,y+1))] /$$

$$(k_0 + 2 \cdot k_1),$$

mit $k_0 = 8$, $k_1 = 1$.

Das zu codierende Videosignal $s_n$ wird nun aus dem 1. Halbbild $S^{1f}_n$ gewonnen, nachdem es z.B. um den Faktor zwei horizontal und vertikal unterabgetastet wurde.

Die Eingangssignale $S_n$ am Eingang 10 können das Format 625L/50Hz/2:1 haben mit 720*576 aktiven Bildpunkten für die Luminanzkomponente und mit jeweils 360*576 aktiven Bildpunkten für die Chrominanzkomponenten. Die Chrominanzkomponenten können entsprechend der Luminanzkomponente verarbeitet werden oder auch grundsätzlich im Halbbild gefiltert werden.

Die Ausgangssignale $s_n$ von Bildformatwandler 14 und in codierter Form am Ausgang 18 können z.B. ein progressives Bildformat mit 360*288 aktiven Bildpunkten für die Luminanzkomponente und mit jeweils 180*144 aktiven Bildpunkten für die Chrominanzkomponenten haben.

Fig. 2 zeigt den Bildformatwandler 14 detaillierter. Der erste Eingang 20 ist mit einem Vollbildspeicher 22 verbunden und erhält um ein Halbbild verzögerte Bildsignale vom jeweils ersten Halbbild von Halbbildspeicher 12, der zweite Eingang 21 ist mit einer Bewegungs-Kompensationsschaltung 23 verbunden und erhält zeilenverzögerte Bildsignale vom jeweils zweiten Halbbild von Zeilenspeicher 13, der dritte Eingang 24 ist ebenfalls mit der Bewegungs-Kompensationsschaltung verbunden und erhält Bewegungsparameter vom Bewegungs-Parameter-Generator 16 und der vierte Eingang 27 erhält Ausgangssignale vom Änderungsdetektor 17.

Die Bildsignale aus dem Zeilenspeicher 13 werden entsprechend den bildweisen Bewegungsparametern aus dem Bewegungs-Parameter-Generator nach bekannten Verfahren bewegungskompensiert und dem Vollbildspeicher 22 zugeführt. Über den Ausgang 211 können die Zeilen im Zeilenspeicher adressiert werden. Am Ausgang des Vollbildspeichers liegen nun Vollbild-Signale mit maximaler vertikaler Ortsauflösung vor, die in dem anschließenden Vertikalfilter 25 bildpunktweise entsprechend dem Signal am vierten Eingang 27 im Vollbild oder im Halbbild gefiltert und ebenfalls über den Ausgang 26 dem Änderungsdetektor 17 zugeführt werden.

An das Vertikalfilter schließt sich eine Subsampling-Stufe 28 an, an deren Ausgang 29 das Bildsignal $s_n$ abgreifbar ist.

Die bildweisen Bewegungsparameter können jeweils für ein ganzes Bild gültige Zoom- und/oder Pan-Faktoren enthalten oder Verschiebungsvektoren für Ausschnitte innerhalb der Bilder sein. Zum Beispiel kann für jeden Bildpunktblock von 8*8 Bildpunkten ein Verschiebungsvektor gebildet werden.

## Patentansprüche

1. Verfahren zur Codierung, bei dem aus Bildpunkten bestehende Bildsignale bewegungskompensiert und unter Generierung von Bewegungsparametern codiert werden, **dadurch gekennzeichnet,** daß bei einer vor der Codierung (15) erfolgenden Bildformatwandlung (14) bildweise Bewegungsparameter zur Bewegungskompensation verwendet werden, wobei die Bildsignale bei der Bildformatwandlung mindestens in vertikaler Richtung unterabgetastet werden und mit Hilfe einer Änderungsdetektion (17) aufgrund der bildmäßigen Bewegungskompensation nicht korrekt bewegungskompensierte Bildpunkte ermittelt werden, wobei die Bildpunkte im Fall korrekter Bewegungskompensation vertikal im Vollbild und im Fall nicht korrekter Bewegungskompensation vertikal im Halbbild vor oder bei der Unterabtastung gefiltert (25) werden.

2. Verfahren nach Anspruch 1, **dadurch gekennzeichnet,** daß die Bildsignale nach der Bildformatwandlung (14) gegenüber den ursprünglichen Bildsignalen in vertikaler und/oder horizontaler Richtung um den Faktor zwei unterabgetastet sind, wobei die Bildsignale insbesondere vor der Bildformatwandlung im Zwischenzeilenformat und nach der Bildformatwandlung in einem progressiven Format vorliegen.

3. Verfahren nach Anspruch 1 oder 2, **dadurch gekennzeichnet,** daß vor der Filterung (25) und Unterabtastung (28) jeweils ein zweites Halbbild $S^2_n$ in die entsprechende räumliche und zeitliche Lage des entsprechenden ersten Halbbilds $S^1_n$ verschoben wird, n = 1,2,3,... .

4. Verfahren nach einem oder mehreren der Ansprüche 1 bis 3, **dadurch gekennzeichnet,** daß vor der Filterung (25) und Unterabtastung (28) jeweils ein zweites Halbbild $S^2_n$ und ein zweites Halbbild $S^2_{n-1}$ des vorhergehenden Bildes $S_{n-1}$ in die entsprechende räumliche und zeitliche Lage des entsprechen-den ersten Halbbilds $S^1_n$ verschobenwird, wobei die beiden zweiten Halbbilder $S^2_n$ und $S^2_{n-1}$ gemittelt werden.

5. Verfahren nach einem oder mehreren der Ansprüche 1 bis 4, **dadurch gekennzeichnet,** daß bei der Änderungsdetektion (17) für jeden Bildpunkt im ersten Halbbild $S^1_n$ in einem symmetrisch hierzu angeordneten Fenster von Bildpunkt-Positionen die Absolutwerte der Differenzen der bewegungskompensierten zweiten Halbbilder $S^{2k}_{n-1}$, $S^{2k}_n$ zu einem Wert $\Sigma$ aufsummiert werden, wobei die Größe des Fensters insbesondere 5*4 Bildpunkte beträgt.

6. Verfahren nach Anspruch 5, **dadurch gekennzeichnet,** daß im bewegungskompensierten Vollbild gefiltert wird, wenn der Wert $\Sigma$ kleiner gleich einer ersten Schwelle $T_1$ ist und daß im Halbbild gefiltert wird, wenn der Wert $\Sigma$ größer als eine zweite, höhere Schwelle $T_2$ ist.

**7.** Verfahren nach Anspruch 6, **dadurch gekennzeichnet,** daß eine entsprechende Linearkombination beider Filtersignale verwendet wird, wenn der Wert $\Sigma$ zwischen den beiden Schwellen $T_1$ und $T_2$ liegt.

**8.** Verfahren nach Anspruch 6 oder 7, **dadurch gekennzeichnet,** daß die erste Schwelle einen Wert von ungefähr sechs mal und die zweite Schwelle einen Wert von ungefähr zwölf mal der Anzahl der Bildpunkte im Fenster hat.

**9.** Verfahren nach einem oder mehreren der Ansprüche 1 bis 8, **dadurch gekennzeichnet,** daß die bildweisen Bewegungsparameter für jeweils ein ganzes Bild gültige Zoom- und/oder Pan-Faktoren enthalten oder Verschiebungsvektoren für Ausschnitte innerhalb der Bilder sind.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | IEEE TRANSACTIONS ON BROADCASTING, Band BC-33, Nr. 4, Dezember 1987, Seiten 130-160, New York, US; Y. NINOMIYA et al.: "An HDTV broadcasting system utilizing a bandwidth compression technique - MUSE"<br>* Seite 134, linke Spalte, Zeile 21 - Seite 136, linke Spalte, Zeile 2; Seite 137, rechte Spalte, Zeile 1 - Seite 138, rechte Spalte, Zeile 18 *<br>--- | 1-10 | H 04 N 5/44<br>H 04 N 7/12 |
| A | EP-A-0 390 660 (THOMSON CONSUMER ELECTRONICS)<br>* Spalte 1, Zeile 35 - Spalte 4, Zeile 18; Spalte 8, Zeile 44 - Spalte 9, Zeile 47 *<br>--- | 1,3-7 | |
| A | SIGNAL PROCESSING, Band 16, Nr. 2, Februar 1989, Seiten 109-127, Amsterdam, NL; B. GIROD et al.: "Vertical sampling rate decimation and line-offset decimation of colour difference signals"<br>* Seite 112, linke Spalte, Zeile 12 - Seite 113, linke Spalte, Zeile 32 *<br>--- | 1,2 | RECHERCHIERTE SACHGEBIETE (Int. Cl.5)<br><br>H 04 N |
| A | PHILIPS TECHNICAL REVIEW, Band 43, Nr. 8, August 1987, Seiten 197-212, Eindhoven, NL; M.J.J.C. ANNEGARN et al.: "HD-MAC: A step forward in the evolution of television technology"<br>* Seite 204, linke Spalte, Zeile 1 - Seite 206, linke Spalte, Zeile 33; Seite 208, linke Spalte, Zeile 28 - rechte Spalte, Zeile 25; Abbildung 11 *<br>---      -/- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 13-07-1992 | BERWITZ P. |

**Europäisches Patentamt**

# EUROPÄISCHER RECHERCHENBERICHT

Nummer der Anmeldung

EP 92 10 5878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | ICASSP'82 PROCEEDINGS, Paris, 3. - 5. Mai 1972, Band 1, Seiten 464-466, Paris, FR; T.S. HUANG et al.: "Interframe coding with general two-dimensional motion compensation" * Das ganze Dokument * --- | 1 | |
| A | 1988 IEEE INTERNATIONAL SYMPOSIUM ON CIRCUITS AND SYSTEMS - PROCEEDINGS, Espoo, 7. - 9. Juni 1988, Band 1, Seiten 463-466; F. MAY: "Model based movement compensation and interpolation for ISDN videotelephony" * Seite 463, rechte Spalte, Zeile 13 - Seite 465, rechte Spalte, Zeile 34 * --- | 1 | |
| A,D | EP-A-0 414 113 (DEUTSCHE THOMSON-BRANDT) * Das ganze Dokument * ----- | 3 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 13-07-1992 | BERWITZ P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)